# EUROPÄISCHE PATENTSCHRIFT

(11) **EP 2 096 214 B1**
(45) Veröffentlichungstag und Bekanntmachung des Hinweises auf die Patenterteilung: **13.05.2015**
(21) Anmeldenummer: 09002877.0
(22) Anmeldetag: 27.02.2009
(51) Int. Cl.: E03B 7/07

(54) **Trink-Brauchwasserversorgungseinrichtung eines Gebäudes und Steuervorrichtung für eine solche**
Drinking service water supply device of a building and control device for same
Dispositif d'alimentation en eau potable d'un bâtiment et dispositif de commande pour celui-ci

(30) Priorität: 28.02.2008 DE 202008002822 U
(43) Veröffentlichungstag der Anmeldung: 02.09.2009
(73) Patentinhaber: Gebr. Kemper GmbH + Co. KG Metallwerke, 57462 Olpe (DE)
(72) Erfinder: Blumenthal, Roland, Dr., 50374 Erftstadt (DE); Theile, Tobias, 57489 Drolshagen (DE)
(74) Vertreter: Grünecker Patent- und Rechtsanwälte PartG mbB

(56) Entgegenhaltungen:
- WO-A2-2005/124494
- DE-A1- 3 004 520
- DE-A1- 4 341 898
- DE-A1- 19 706 564
- DE-A1- 19 814 903
- DE-A1-102006 002 360
- DE-U1- 20 107 717
- FR-A1- 2 715 986

## Beschreibung

Die vorliegende Erfindung betrifft ein Verfahren zur Steuerung einer Trink- und Brauchwasserversorgungseinrichtung eines Gebäudes mit einem Hausanschluss, der an das öffentliche Versorgungsnetz angeschlossen ist, und verschiedenen, davon abgehenden und innerhalb des Gebäudes verlegten Versorgungsleitungen, denen Abwasserleitungen zugeordnet sind, die mit einem Abwasserabgang kommunizieren, der an das öffentliche Abwassernetz angeschlossen ist.

Solche Trink- und Brauchwasserversorgungseinrichtungen sind in heutigen Haushalten, Wohnhäusern bzw. Großgebäuden wie Krankenhäusern, Hotels und Bürogebäuden allgemein üblich. Als Hausanschluss im Sinne der vorliegenden Erfindung soll dabei insbesondere ein Rohrbereich verstanden werden, der sich an den Hauswasserzähler anschließt, welcher in das Gebäude eingeleitete Brauchwasser erfasst. Als Hausanschluss im Sinne der vorliegenden Erfindung gilt dabei insbesondere ein solcher Bereich einer Trink- und Brauchwasserversorgungseinrichtung eines Gebäudes, der unmittelbar mit dem Hauswasserzähler kommuniziert, allerdings noch keinen Abzweig aufweist, der zu unterschiedlichen Versorgungsleitungen führt. Als Abwasserabgang im Sinne der vorliegenden Erfindung soll derjenige Rohrleitungsbereich einer Trink- und Brauchwasserversorgungseinrichtung eines Gebäudes verstanden werden, der das Abwasser in das öffentliche Abwassernetz einspeist. Sowohl der Hausanschluss als auch der Abwasserabgang befinden sich üblicherweise unmittelbar benachbart zueinander und auf Kellerniveau. Bei Trink- und Brauchwasserversorgungseinrichtungen der gattungsgemäßen Art besteht grundsätzlich das Problem, dass Wasser ungewollt aus dem Rohrleitungssystem austritt. Ein möglicher Störfaktor sind undichte Versorgungsleitungen innerhalb des Gebäudes, die kontinuierlich geringe Mengen an Wasser abgeben, oder aber eine unbeabsichtigte große Wasserabgabe in das Gebäude durch Rohrleitungsbruch.

Die vorliegende Erfindung betrifft insbesondere ein Verfahren zur Steuerung einer Trink- und Brauchwasserversorgungseinrichtung wie sie aus der DE 197 06 564 bekannt ist, die die oberbegrifflichen Merkmale offenbart.

Es sind aus der DE 197 06 564 Ventile mit einem Wasserfühler bekannt, die zum Absperren einer Versorgungsleitung im Falle einer Leckage in dieser Versorgungsleitung vorzusehen sind. Die FR 2 715 986 A1 offenbart ein batteriebetriebenes Spülventil mit einer vorgegebenen Spülfunktion. Die Spülfunktion ist zeitgesteuert. Die FR 2 715 986 A1 offenbart danach ein dezentral gesteuertes Spülventil, d.h. ein Spülventil mit zeitlich vorgegebenem Öffnungszyklus.

Die DE 10 2006 002 360 A1 betrifft eine Leckagedetektionsvorrichtung, die bei erkannter Leckage ein Ventil absperrt. Die DE 10 2006 002 360 A1 basiert auf dem Prinzip der Strömungsmessung in der Wasserleitung. Wird durch diese Strömungsmessung erfasst, dass ein ununterbrochener Wasserfluss stattfindet, wird auf einen Störfall geschlossen und der Wasserfluss wird unterbrochen.

Der Offenbarungsgehalt der DE 201 07 717 U1 entspricht im Wesentlichen demjenigen der DE 10 2006 002 360 A1. Auch nach der DE 201 07 717 U1 wird ein ungewöhnlich langer Wasserdurchlauf als Leckage gewertet und führt zum Verschluss des Hausanschlussventils. Des Weiteren ist an einem Gartenwasserauslauf ein Durchflussmessfühler vorgesehen, so dass die Auswerteeinrichtung der Steuereinheit lang anhaltenden Wasserfluss durch Gießen des Gartens nicht als Leckage wertet und den Wasserdurchfluss zulässt.

Die EP 1 845 207 A1 offenbart ein Trink- und Brauchwassersystem mit mehreren Steigrohrsträngen mit jeweils zu Verbrauchern führenden Ringleitungen. Jedem Strang ist ein steuerbares Ventil zugeordnet, das im geöffneten Zustand eine eine Spülströmung in der Ringleitung bewirkende Strömung in dem Strang erzeugt, so dass abgestandenes Wasser über ein mit einer Abgabestelle verbundenes Spülventil abgeleitet wird.

Der vorliegenden Erfindung liegt das Problem zugrunde, eine Trink- und Brauchwasserversorgungseinrichtung eines Gebäudes mit einer Steuervorrichtung anzugeben, welche unerwünschten Wassereintritt in das Gebäude verhindert und trotzdem eine Verkeimung der Trink- und Brauchwasserversorgungseinrichtung vermeidet. Des Weiteren soll ein Verfahren zur Steuerung einer solchen Einrichtung angegeben werden.

Zur Lösung dieses Problems schlägt die vorliegende Erfindung ein Verfahren zur Steuerung einer Trink- und Brauchwasserversorgungseinrichtung mit den Merkmalen von Anspruch 1 und eine Trink- und Brauchwasserversorgungseinrichtung eines Gebäudes mit einer Steuervorrichtung mit den Merkmalen von Anspruch 5 vor. Diese Trink- und Brauchwasserversorgungseinrichtung hat ein Hausanschlussabsperrventil, welches die Versorgungsleitungen innerhalb des Gebäudes gegenüber dem Hausanschluss absperren kann. Dieses Hausanschlussabsperrventil ist über eine Steuervorrichtung angesteuert, an die wenigstens ein Wasserfühler, der zur Detektion einer Leckage in einem Raum des Gebäudes montiert ist oder ein Drucksensor angeschlossen ist. Das Ausgangssignal von Wasserfühler bzw. Drucksensor wird dabei vorzugsweise an ein Leckagedetektionsmodul weitergeleitet, das eine Logik umfasst, die aufgrund des erhaltenen Signals entscheidet, ob ein Leckage in der Versorgungsleitung und/oder der Spülleitung vorliegt. Das Zusammenwirken von Hausanschlussabsperrventil- und Steuervorrichtung bewirkt, das im Falle einer detektierten Leckage innerhalb des Gebäudes die Wasserversorgung der Trink- und Brauchwasserversorgungseinrichtung insgesamt abgeschnitten wird, d.h. der Hausanschluss abgesperrt wird. Danach besteht die Möglichkeit, die Zufuhr sämtlichen Wassers in das Gebäude zu unterbinden. Die Steuervorrichtung besitzt vorzugsweise ein Zeitmodul, über welches die Steuervorrichtung zeitschaltbar ist. Dieses Zeitmodul kann Zeitintervalle festlegen. Es kann ebenso gut nach Art einer Uhr funktionieren und Tageszeiten sowie Tage, Wochen und Monate angeben. Das Zeitmodul hat darüber hinaus vorzugsweise einen Speicher zur Eingabe vorgegebener Zeitprofile. Dementsprechend besteht die Möglichkeit, über das Zeitmodul der Steuervorrichtung gewisse Zeiten vorzugeben, in denen das Hausanschlussabsperrventil verriegelt ist. So ist die Steuervorrichtung derart ausgestaltet, dass bei einer längeren Abwesenheit zeitgesteuert das Hausanschlussabsperrventil zugefahren wird, um ein unerwünschtes Eindringen von Wasser in das Gebäude von der Versorgungsseite zu verhindern. Bei einem gewünschten Durchspülen des Rohrleitungssystems wird selbstverständlich wenigstens das eine Spülventil von der Steuervorrichtung geöffnet und zeitgleich sowohl das Hausanschlussabsperrventil geöffnet. Gemäß der vorliegenden Erfindung ist das Spülventil durch das Zeitmodul schaltbar. Eine solche Ausgestaltung ist wünschenswert im Falle eines über längere Zeit ungenutzten Gebäudes wenn verhindert werden soll, dass Trink- bzw. Brauchwasser in den Leitungen über längere Zeit steht, so dass sich Legionellen, Pseudomonaden oder andere Bakterien in dem Rohrleitungssystem zu der Trink- und Brauchwasserversorgungseinrichtung entwickeln könnten. In diesem Fall sollte in dem Zeitmodul ein fester Spülzyklus hinterlegt sein.

Praktische Beispiele für ein entsprechendes Zeitmodul sind Programmierungen in einem Wochenendhaus, bei denen das Zeitmodul das Hausanschlussabsperrventil lediglich am Wochenende offenhält, ansonsten aber verschließt, so dass sich über die Woche kein Wasser innerhalb des Gebäudes unbemerkt in Folge eines Rohrleitungsbruchs oder einer kleinen Leckage ausbreiten kann. Die Steuervorrichtung ist vorzugsweise Busfähig ausgestaltet, so dass unterschiedliche, der Trink- und Brauchwasserversorgungseinrichtung zugeordnete Funktionen innerhalb des Gebäudes über die Steuervorrichtung gesteuert werden können oder aber Signale aus unterschiedlichen Bereichen des Gebäudes der Steuervorrichtung zugeführt werden können. Gedacht ist hierbei insbesondere an die Zuführung von Signalen von Temperaturmessern, Druckmessern oder Wassersensoren, auf die später noch eingegangen wird. Sämtliche Signale, die einer Trink- und Brauchwasserversorgungseinrichtung zugeordnet sind, werden vorzugsweise der Steuervorrichtung zugeleitet und dort verarbeitet.

Gemäß einer bevorzugten Weiterbildung der vorliegenden Erfindung weist die Trink- und Brauchwasserversorgungseinrichtung einen Wasserfühler auf, der zur Detektion einer Leckage in einem Raum des Gebäudes durch Überprüfung der Feuchtigkeit im Bodenbereich des Raumes montiert ist. Es handelt sich bei diesem Wasserfühler also um einen Sensor, der unmittelbar das Vorhandensein von Wasser feststellen kann. Solche Wasserfühler werden insbesondere in solchen Räumen montiert, in denen Wasseraustritt befürchtet wird, die aber relativ selten begangen werden. Wasserfühler können auch an Positionen montiert werden, an denen ein eventueller Wasseraustritt aufgrund der Lage des Wasseranschlusses erst relativ spät bemerkt werden kann. Eine weitere Lösung besteht in der Anbringung eines Wasserfühlers an Steigeleitungen bei denen die Detektion einer Leckage insbesondere aufgrund der Isolation ansonsten sehr schwierig ist. Auch das Signal des Wasserfühlers wird der Steuervorrichtung zugeleitet und dort verarbeitet. Im Falle einer detektierten Leckage wird die Steuervorrichtung in der Regel den Hausanschluss absperren, so dass kein Wasser durch die Leckage nachfließen kann.

Des Weiteren ist der Steuervorrichtung ein Signalgeber zugeordnet, der im Falle einer von dem Wasserfühler detektierten Leckage ein Signal abgibt, durch welches der Benutzer auf die Leckage aufmerksam gemacht wird. Hierbei kann insbesondere bei der Einbindung der Steuervorrichtung in ein Bus-System innerhalb des Gebäudes nicht nur der Umstand angegeben werden, dass eine Leckage aufgetreten ist, sondern darüber hinaus wo die Leckage aufgetreten ist, um eine möglichst rasche Lokalisation des Fehlers zu ermöglichen.

Gemäß einer weiteren bevorzugten Ausgestaltung weist die erfindungsgemäße Trink- und Brauchwasserversorgungseinrichtung ein von der Steuervorrichtung angesteuertes motorgetriebenes Spülventil auf, welches an dem Ende einer Versorgungsleitung angeschlossen ist und die Versorgungsleitung gegenüber dem Abwasserabgang absperrt. Ein solches Spülventil kann beispielsweise an jedem einzelnen horizontal oder vertikal verlaufenden Strang innerhalb eines Gebäudes vorgesehen sein, wie dies die EP 1 845 207 A1 der vorliegenden Anmelderin angibt. Ergänzend oder alternaiv kann das Spülventil auch im Bereich des Abwasserabganges vorgesehen sein, d.h. als zentrales Absperrventil für eine bis in den Keller des Gebäudes hinuntergeführte Versorgungsleitung, mit der vorzugsweise sämtliche Versorgungsleitungen des Gebäudes kommunizieren, so dass ein Öffnen des Spülventils zu einer Durchspülung sämtlicher Versorgungsleitungen innerhalb des Gebäudes führt. Selbstverständlich können auch mehrere Spülventile vorgesehen sein, wie dies die vorerwähnte EP 1 845 207 A1 offenbart.

Der Spülzyklus kann aber auch variabel gesteuert werden, beispielsweise aufgrund eines Signals eines vorzugsweise vorzusehenden Temperatursensors, der angibt, welche tatsächliche Temperatur im Bereich der Trink- und Brauchwasserversorgungseinrichtung vorherrscht, da bekanntlich die Entwicklung von Bakterien mit zunehmender Temperatur begünstigt wird. Das Signal des Temperatursensors wird daher insbesondere zur Veränderung des Spülintervalls in der Steuervorrichtung weiterverarbeitet.

Des Weiteren kann insbesondere im Hinblick auf eine hinreichende Durchströmung und damit Durchspülung des Rohrleitungssystems zu der Trink- und Brauchwasserversorgungseinrichtung der Volumenstrom innerhalb derselben gemessen werden. Hierzu wird vorzugweise mindestens ein in der Versorgungsleitung montierter und den Volumenstrom dieser Versorgungsleitung und/oder der Abwasserleitung erfassender Durchflusssensor montiert. Die von dem Durchflusssensor detektierte Durchflussmenge wird in der Steuervorrichtung bei der Entscheidung berücksichtigt, ob ein Durchspülen des Rohrleitungssystems notwendig ist. Dabei kann durch angemessene Verteilung von Spülventilen und Durchflusssensoren bzw. Temperatursensoren auch ein bereichsweises Spülen des Rohrleitungssystems angeordnet werden. Dies wird insbesondere dann der Fall sein wenn festgestellt wird, dass gewisse Bereiche innerhalb des Gebäudes hinreichend durchspült sind, wo hingegen in anderen Bereichen durch unzureichende Spülung eine Verseuchung des Rohrleitungssystems durch Bakterien zu befürchten ist.

Insbesondere bei der Anordnung eines Spülventils im Bereich des Abwasserabganges und in Kombination mit einem freien Ablauf zwischen dem Abwasserabgang und dem öffentlichen Abwassersystem wird gemäß einer weiteren bevorzugten Ausgestaltung der vorliegenden Erfindung eine zwischen dem Spülventil und dem Abwasserabgang vorgesehene Überlauf-Überwachungseinrichtung vorgeschlagen, deren Signal auf die Steuervorrichtung aufgeschaltet ist. Bei dieser Weiterbildung ist zu beachten, dass das Spülen einer Versorgungsleitung unmittelbar in eine Abwasserleitung aufgrund gesetzlicher Vorschriften regelmäßig über einen freien Auslauf erfolgt, so dass eine eventuelle Rückströmung innerhalb der Abwasserleitung nicht in die Versorgungsleitung gelangen kann. Diesem freien Auslauf ist gemäß der bevorzugten Weiterbildung die Überwachungseinrichtung für einen Überlauf des Auslaufes zugeordnet, so dass bei einem zu befürchtenden Überlauf des Auslaufes das Spülventil aufgrund der Überlauf-Überwachungseinrichtung durch die Steuervorrichtung abgesperrt und damit das Durchspülen gestoppt wird. Der Abwasserabgang befindet sich regelmäßig stromabwärts des freien Auslaufs.

Im Hinblick auf eine Detektion einer eventuellen Leckage wird gemäß einer weiteren bevorzugten Ausgestaltung der vorliegenden Erfindung einer den Innendruck in der Versorgungsleitung überwachender Drucksensor vorgeschlagen, dessen Signal von der Steuervorrichtung zur Stellung wenigstens eines der steuerbaren Ventile verarbeitet wird. So ist es beispielsweise denkbar, dass bei einer längeren Abwesenheit bzw. Nichtnutzung eines Gebäudes das Hausanschlussabsperrventil wie auch sämtliche Spülventile verschlossen sind. Sofern in diesem Zustand der Drucksensor einen Druckabfall ermittelt, kann dies von der Steuervorrichtung als Hinweis auf eine Leckage im Rohrleitungssystem gewertet werden. Die Steuervorrichtung kann so ausgestaltet sein, dass sie zum einen das Druckprofil des Drucksensors mit bekannten hinterlegten Druckprofilen vergleicht und entscheidet, ob eine Leckage oder eine übliche Wasserentnahme vorliegt. Des Weiteren kann die Steuervorrichtung aufgrund des Signals des Drucksensors entscheiden, sämtliche Spülventile zu öffnen, um das Rohrleitungssystem bei weiterhin geschlossenem Hausanschlussabsperrventil im Wesentlichen drucklos zu schalten. Ein oder mehrere Belüftungsventile innerhalb des Rohrleitungssystems, die ebenfalls von der Steuervorrichtung gesteuert werden, können diese vollkommene Entleerung des Rohrleitungssystems innerhalb des Gebäudes begünstigen.

Mit der vorliegenden Erfindung wird ferner eine Trink- und Brauchwasserversorgungseinrichtung eines Gebäudes mit einer Steuervorrichtung vorgeschlagen, welche als zentrale Steuervorrichtung die zuvor beschriebenen Vorgänge insgesamt oder lediglich teilweise steuern kann. Die erfindungsgemäße Trink- und Brauchwasserversorgungseinrichtung eines Gebäudes mit einer Steuervorrichtung ist in Anspruch 5 angegeben. Die Steuervorrichtung kann Signale eines Zeitmoduls und/oder eines Leckagesensors und/oder einer Überlauf-Überwachungseinrichtung im Bereich des Abwasserabganges und/oder eines den Innendruck in der Versorgungsleitung überwachenden Drucksensors verarbeiten. Ergänzend oder alternativ kann die Steuervorrichtung das Signal des Temperatursensors oder des Durchflusssensors verarbeiten. Die Steuervorrichtung hat eine innere Logik, aufgrund deren entschieden wird, ob das oder die steuerbaren Ventile geöffnet oder geschlossen werden. Es ist wenigstens ein steuerbares Ventil der Steuervorrichtung zugeordnet und wird durch diese gestellt, und zwar vorzugweise das Hausanschlussabsperrventil, um die Wasserzufuhr zu dem Gebäude insgesamt abzusperren. Die Steuervorrichtung kann dabei das bzw. die steuerbaren Ventile insbesondere zeitabhängig stellen. Regelmäßig ist die Steuervorrichtung derart ausgebildet, dass diese bei ansonsten verschlossenem Hausanschlussabsperrventil und zentralem Spülventil die beiden vorerwähnten Ventile öffnet, um ein Durchspülen des Rohrleitungssystems für die Trink- und Brauchwasserversorgungseinrichtung zu ermöglichen, so dass auch bei längerer Abwesenheit eine Verkeimung des Rohrleistungssystems durch stehendes Wasser vermieden wird.

Des Weiteren ist die Steuervorrichtung vorzugsweise derart ausgebildet, dass bei einer ermittelten Leckage das Hausanschlussabsperrventil über die Steuervorrichtung zugefahren wird.

Das zuvor für die Trink- und Brauchwasserversorgungseinrichtung Ausgeführte gilt für die Steuervorrichtung als solche entsprechend. Die Steuervorrichtung ist derart ausgestaltet, dass sie die zuvor beschriebenen Vorgänge ganz oder teilweise automatisiert steuern kann.

Weitere bevorzugte Weiterbildungen der erfindungsgemäßen Trink- und Brauchwasserversorgungseinrichtung eines Gebäudes mit einer Steuervorrichtung sind in den auf die Trink- und Brauchwasserversorgungseinrichtung eines Gebäudes mit einer Steuervorrichtung zurückbezogenen abhängigen Ansprüchen angegeben.

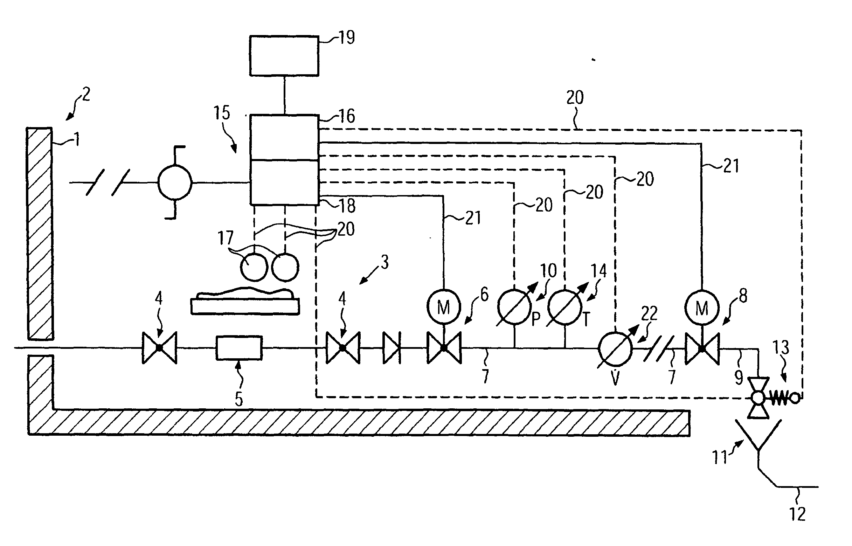

Weitere Einzelheiten, Vorteile und Wirkungen der Erfindung ergeben sich aus der nachfolgenden Beschreibung eines Ausführungsbeispiels in Verbindung mit der Zeichnung. Diese zeigt eine schematische Darstellung einer Trink- und Brauchwasserversorgungseinrichtung, wobei im Wesentlichen lediglich die Versorgungsleitungen, nicht aber die Abwasserleitungen dargestellt sind.

Die Figur zeigt schematisch eine Wand 1 eines Gebäudes 2, in dessen Kellerbereich. Auf der linken Seite der Zeichnung ist ein Hausanschluss 3 mit einem zwischen zwei händisch zu betreibenden Absperrventilen 4 vorgesehenen Wasserzähler 5, der ein stromab des Hauswasserzählers 5 vorgesehenes Hausanschlussabsperrventil 6 aufweist. Hinter diesem Hausanschlussabsperrventil 6 gehen verschiedene, im Einzelnen nicht dargestellte Versorgungsleitungen 7 ab, die zu verschiedenen Wasserverbraucher innerhalb des Gebäudes 2 führen. Ebenfalls wie das Hausanschlussabsperrventil 6 befindet sich am Ende einer in den Keller des Gebäudes zurückgeführten Versorgungsleitung 7 ein Spülventil 8, welches die Versorgungsleitung 7 von einem Abwasserleitungsstrang 9 trennt. Dieser Abwasserleitungsstrang 9 führt zu einem "Freien Auslauf' 11, an den auch weitere Abwasserstränge angeschlossen sein können. Des Weiteren ist dem "Freien Auslauf" 11 eine Überlauf-Überwachungseinrichtung 13 zugeordnet, die ein den Überlauf des "Freien Auslaufs" 11 anzeigendes Signal erzeugt. Die motorbetriebenen und automatisch zu steuernden Ventile 6 und 8 sind über Motorleitungen 21 mit einer zentralen Steuervorrichtung 15 verbunden, die ein Zeitmodul 16 und Eingänge für verschiedene Wasserfühler 17 umfasst und mit einer Gebäudesteuervorrichtung 19 kommuniziert, die beispielsweise im Nutzbereich des Gebäudes 2 vorgesehen sein kann, um gewisse Betriebszustände optisch und/oder akustisch anzuzeigen. Die Wasserfühler 17 sind beispielsweise in einem Kellerraum im Bereich einer Waschmaschine oder einer Zentralheizung vorgesehen und geben an, ob in diesen Räumen ein wenn auch geringer Wassereintritt zu verzeichnen ist.

Wird eine Leckage durch die Wasserfühler 17 angezeigt, bewirkt die Steuervorrichtung 15 beispielsweise, dass das Hausanschlussabsperrventil abgesperrt wird, um weiteren Zufluss von Wasser in das Gebäude zu unterbinden. Ebenso ist es denkbar, steuerbare Ventile im Bereich von verschiedenen Strängen vorzusehen, so dass im Bereich einer Leckage lediglich derjenige Strang von der Wasserversorgung abgeschlossen wird, dem der entsprechende Wasserfühler zugewiesen ist.

Eine längere vorhersehbare Nichtnutzung des Gebäudes 2 kann in dem Zeitmodul 16 hinterlegt sein. In Zeiten der Nichtnutzung fährt die Steuervorrichtung 15 gesteuert durch das Zeitmodul beispielsweise das Hausanschlussabsperrventil 6 zu, um einen Eintritt von Wasser in das Gebäude von der Versorgungsseite- zu verhindern. Bei längerer Nichtnutzung kann in dem Zeitmodul ein Spülschritt hinterlegt sein, zu dem die Steuervorrichtung das Hausanschlussabsperrventil 6 öffnet und des Weiteren das Spülventil 8 auffährt, so dass eine Durchspülung der oder sämtlicher Versorgungsleitungen durchgeführt wird.

Alternativ zu einer zeitgesteuerten Spülung kann auch das Signal eines Temperatursensors verwendet werden, der die Temperatur des Trinkwassers in den Leitungssystemen im Bereich der Versorgungsleitungen überprüft und durch Analyse durch die Steuervorrichtung angibt, dass über längere Zeit kein Wasser durch die Versorgungsleitungen geflossen ist. Bei einem temperatur- und/oder auch einem zeitgesteuerten Spülen kann des Weiteren auch die Umgebungstemperatur berücksichtigt werden, die über einen ebenfalls an die Steuervorrichtung 15 angeschlossenen Temperatursensor erfasst wird. Bei höheren gemessenen Temperaturen verkürzen sich die Spülintervalle, um einer möglichen Verkeimung des Rohrleitungssystems vorzubeugen. Die Steuervorrichtung ist aber vorzugsweise derart ausgestaltet, dass jedwede Entscheidung, ob ein Spülen stattfindet, auch unter Berücksichtigung des Temperaturverlaufs in dem Rohrleitungssystem erfolgt.

Als motorisch angetriebene Ventile, speziell für das Hauseingangsabsperrventil 6 und das Spülventil 8 kommen vorzugsweise Kugelhähne zum Einsatz, die den effektiven Strömungsquerschnitt der angeschlossenen Rohrleitung nicht verringern. Des Weiteren ist innerhalb des Antriebs bzw. im Bereich des Ventilgehäuses ein Federelement vorgesehen, welches bei einem Stromausfall oder einer fehlerhaften Ansteuerung des mit dem Ventil verbundenen Antriebs zwangsläufig zu einem Absperren des Ventils führt.

Die vorerwähnte Steuervorrichtung 15 kann direkt in eine Gebäudeleittechnik eines Krankenhauses oder eines Industriebetriebes eingebaut sein. Speziell ist denkbar, dass die von der Steuervorrichtung abgegebenen Signale zum Betriebsverhalten der Trink- und Brauchwasserversorgungseinrichtung an dem Leitstand der Gebäudeleittechnik örtlich auf die Gegebenheiten in einzelnen Bereichen des Gebäudes aufgeschlüsselt angezeigt werden.

### Bezugszeichenliste

- 1: Trink- und Brauchwasserversorgungseinrichtung
- 2: Gebäude
- 3: Hausanschluss
- 4: Absperrventil
- 5: Hauswasserzähler
- 6: Hausanschlussabsperrventil
- 7: Versorgungsleitung
- 8: Spülventil
- 9: Spülleitung
- 10: Drucksensor
- 11: Freier Auslauf
- 12: Abwasserabgang
- 13: Überlauf-Überwachungseinrichtung
- 14: Temperatursensor
- 15: Steuervorrichtung
- 16: Zeitmodul
- 17: Wasserfühler
- 18: Leckagedetektionsmodul
- 19: Gebäudesteuervorrichtung
- 20: Sensorleitung
- 21: Motorleitung
- 22: Durchflusssensor

## Patentansprüche

1. Verfahren zur Steuerung einer Trink- und Brauchwasserversorgungseinrichtung eines Gebäudes (2) umfassend einen Hausanschluss (3), der an das öffentliche Versorgungsnetz anschließbar ist, und verschiedene, davon abgehende und innerhalb des Gebäudes (2) verlegte Versorgungsleitungen (7), denen Spülleitungen (9) zugeordnet sind, die mit einem Abwasserabgang (12) kommunizieren, der an das öffentliche Abwassernetz anschließbar ist, und einem motorbetriebenen Hausanschlussabsperrventil (6), welches über eine Steuervorrichtung (15) angesteuert wird,
so dass eine Trink- und Brauchwasserversorgung zwischen Hausanschluss (3) und den Versorgungsleitungen (7) über die Steuervorrichtung (15) abgesperrt wird, wobei die Steuervorrichtung (15), an die wenigstens ein Wasserfühler (17), der zur Detektion einer Leckage in einem Raum des Gebäudes (2) montiert ist und/oder ein Drucksensor (10) angeschlossen ist, ein Leckagedetektionsmodul (18) umfasst, welches im Falle einer von dem Wasserfühler (17) und/oder dem Drucksensor (10) detektierten Leckage das Hausanschlussabsperrventil (6) außerplanmäßig schließt, so dass kein Wasser durch die Leckage nachfließen kann,
**dadurch gekennzeichnet,**
**dass** die Steuervorrichtung (15) ein Zeitmodul umfasst, das es ermöglicht, das Hausanschlussabsperrventil (6) während bestimmter Zeiten planmäßig zu schließen, sowie einen Spülbetrieb auch bei planmäßig abgesperrtem Hausanschlussabsperrventil (6) ermöglicht, bei welchem die Steuervorrichtung (15) durch das Zeitmodul zeitgeschaltet wird und das planmäßig abgesperrte Hausanschlussabsperrventil (6) und ein an einem Ende der Versorgungsleitung (7) angeschlossenes und die Versorgungsleitung (7) gegenüber dem Abwasserabgang (12) absperrendes motorbetriebenes Spülventil (8) durch die Steuervorrichtung (15) aufgefahren werden.

2. Verfahren zur Steuerung einer Trink- und Brauchwasserversorgungseinrichtung nach Anspruch 1, **dadurch gekennzeichnet, dass** von der Steuervorrichtung (15) ein Statussignal an eine übergeordnete Gebäudesteuervorrichtung (19), insbesondere eine Gebäudeleittechnik, abgegeben und von dort empfangen wird.

3. Verfahren zur Steuerung einer Trink- und Brauchwasserversorgungseinrichtung nach einem der vorherigen Ansprüche, **gekennzeichnet durch** einen zwischen dem Spülventil (8) und dem Abwasserabgang (12) vorgesehenen freien Auslauf (11) mit einer Überlauf-Überwachungseinrichtung (13), deren Signal auf die Steuervorrichtung (15) aufgeschaltet wird.

4. Verfahren zur Steuerung einer Trink- und Brauchwasserversorgungseinrichtung nach einem der vorherigen Ansprüche, **dadurch gekennzeichnet, dass** der Drucksensor (10) ein den Innendruck in der Versorgungsleitung überwachender Drucksensor ist, dessen Signal in der Steuervorrichtung (15) zur Stellung wenigstens eines der steuerbaren Ventile (6, 8) verarbeitet wird, und dass die Steuervorrichtung (15) derart vorbereitet ist, dass sie aufgrund des Signals des Drucksensors bei abgesperrtem Hausanschlussabsperrventil (16) das Spülventil und wenigstens ein einem die Versorgungsleitungen (7) und Spülleitungen (9) umfassenden Rohrleitungssystem zugeordnetes Belüftungsventil zur vollkommenen Entleerung des Rohrleitungssystems öffnet.

5. Trink- und Brauchwasserversorgungseinrichtung (1) eines Gebäudes (2) mit einer Steuervorrichtung (15) und einem Hausanschluss (3), der an das öffentliche Versorgungsnetz anschließbar ist, und verschiedenen, davon abgehenden und innerhalb des Gebäudes (2) verlegten Versorgungsleitungen (7), denen Spülleitungen (9) zugeordnet sind, die mit einem Abwasserabgang (12) kommunizieren, der an das öffentliche Abwassernetz anschließbar ist,
und mit einem motorbetriebenen, den Hausanschluss gegenüber den Versorgungsleitungen absperrenden Hausanschlussabsperrventil (6), wobei die Steuervorrichtung (15), an die wenigstens ein Wasserfühler (17), der zur Detektion einer Leckage in einem Raum des Gebäudes (2) montiert ist und/oder ein Drucksensor (10) angeschlossen ist, ein Leckagedetektionsmodul (18) umfasst, welches im Falle einer von dem Wasserfühler (17) und/oder dem Drucksensor (10) detektierten Leckage das Hausanschlussabsperrventil (6) außerplanmäßig schließt, so dass kein Wasser durch die Leckage nachfließen kann, **dadurch gekennzeichnet,**
**dass** die Steuervorrichtung (15) ein Zeitmodul (16) umfasst, das es ermöglicht, das Hausanschlussabsperrventil (6) während bestimmter Zeiten planmäßig zu schließen, und dass die Steuervorrichtung (15) einen steuerungsmässig hinterlegten Spülbetrieb aufweist, bei dem bei zunächst planmäßig abgesperrtem Hausanschlussabsperrventil (6) das Hausanschlussabsperrventil (6) und ein an einem Ende der Versorgungsleitung (7) angeschlossenes und die Versorgungsleitung (7) gegenüber dem Abwasserabgang (12) absperrendes Spülventil (8) zum Spülen der Versorgungsleitung (7) auffährt.

6. Trink- und Brauchwasserversorgungseinrichtung (1) nach Anspruch 5, **dadurch gekennzeichnet, dass** die Steuervorrichtung (15) derart ausgestaltet ist, dass der Spülbetrieb abhängig von einem Signal eines Temperatursensors (14) geschaltet wird.

7. Trink- und Brauchwasserversorgungseinrichtung (1) nach Anspruch 5 oder 6, **dadurch gekennzeichnet, dass** die Steuervorrichtung (15) derart ausgebildet ist, dass der Spülbetrieb abhängig von einem Signal eines den Volumenstrom in der Versorgungsleitung (7) bzw. einer Abwasserleitung überwachenden Durchflusssensors (22) geschaltet wird.

## Claims

1. Method of controlling a drinking and tap water supply system of a building (2) comprising a house connection (3) which can be connected to the public supply network and various supply lines (7) branching off therefrom and laid within the building (2), to which are assigned flushing lines (9) communicating with a waste water discharge (12) which can be connected to the public waste water network, and a motor-operated house connection check valve (6) which can be activated via a control device (15),
so that a drinking and tap water supply between the house connection (3) and supply lines (7) can be shut off via the control device (15), and the control device (15), to which at least one water sensor (17) mounted for detecting a leak in a room of the building (2) and/or a pressure sensor (10) is connected, comprises a leak detection module (18) which closes the house connection check valve (6) on an unscheduled basis in the event of a leak detected by the water sensor (17) and/or pressure sensor (10) so that no water is able to flow out from the leak,
**characterised in that**
the control device (15) comprises a timer module which enables the house connection check valve (6) to close during specific periods on a scheduled basis and enables a flushing mode even when the house connection check valve (6) is closed as scheduled, during which the control device (15) is activated by the timer module on a timed basis, and the house connection check valve (6) closed as scheduled and a motor-operated flushing valve (8) connected to one end of the supply line (7) and shutting the supply line (7) off from the waste water discharge (12) are opened by the control device (15).

2. Method of controlling a drinking and tap water supply system as claimed in claim 1, **characterised in that** a status signal is output by the control device (15) to a higher-level building control device (19), in particular a building services management system, by which it is received.

3. Method of controlling a drinking and tap water supply system as claimed in one of the preceding claims, **characterised by** a free outlet (11) disposed between the flushing valve (8) and the waste water discharge (12) with an overflow monitoring device (13), the signal of which is output to the control device (15) .

4. Method of controlling a drinking and tap water supply system as claimed in one of the preceding claims, **characterised in that** the pressure sensor (10) is a pressure sensor monitoring the internal pressure in the supply line, the signal of which is processed in the control device (15) for actuating at least one of the controllable valves (6, 8), and the control device (15) is pre-programmed so that, in response to the signal of the pressure sensor when the house connection check valve (6) is closed, it opens the flushing valve and at least one venting valve co-operating with a pipework system comprising the supply lines (7) and flushing lines (9) in order to drain the pipework system completely.

5. Drinking and tap water supply system (1) of a building (2) having a control device (15) and a house connection (3) which can be connected to the public supply network, and various supply lines (7) branching off therefrom and laid within the building (2), to which are assigned flushing lines (9) communicating with a waste water discharge (12) which can be connected to the public waste water network,
and having a motor-operated house connection check valve (6) shutting the house connection off from the supply lines, and the control device (15), to which at least one water sensor (17) mounted for detecting a leak in a room of the building (2) and/or a pressure sensor (10) is connected, comprises a leak detection module (18) which closes the house connection check valve (6) on an unscheduled basis in the event of a leak detected by the water sensor (17) and/or pressure sensor (10) so that no water is able to flow out from the leak,
**characterised in that**
the control device (15) comprises a timer module (16) which enables the house connection check valve (6) to close during specific periods on a scheduled basis, and the control device (15) has a flushing mode stored on a controlled basis whereby when the house connection check valve (6) is initially closed as scheduled, the house connection check valve (6) and a flushing valve (8) connected to one end of the supply line (7) and shutting the supply line (7) off from the waste water discharge (12) are opened in order to flush the supply line (7).

6. Drinking and tap water supply system (1) as claimed in claim 5, **characterised in that** the control device (15) is configured so that the flushing mode is activated depending on a signal of a temperature sensor (14).

7. Drinking and tap water supply system (1) as claimed in claim 5 or 6, **characterised in that** the control device (15) is configured so that the flushing mode is activated depending on a signal of a flow sensor (22) monitoring the volumetric flow in the supply line (7), respectively a waste water line.

## Revendications

1. Procédé pour commander un dispositif d'alimentation en eau potable et sanitaire d'un bâtiment (2), comprenant un raccord de branchement domestique (3), qui peut être raccordé au réseau d'alimentation public, et différentes conduites d'alimentation (7) qui en partent et sont posées à l'intérieur du bâtiment (2), et auxquelles sont associées des conduites de rinçage (9) communiquant avec un écoulement d'évacuation d'eaux usées (12), qui peut être raccordé au réseau public d'assainissement, et comprenant une vanne d'arrêt ou d'isolement de branchement domestique (6) à fonctionnement motorisé, qui est commandée par l'intermédiaire d'un dispositif de commande (15),
de manière à ce qu'une alimentation en eau potable et sanitaire entre le raccord de branchement domestique (3) et les conduites d'alimentation (7) soit interrompue par l'intermédiaire du dispositif de commande (15), le dispositif de commande (15), auquel est raccordé au moins une sonde de détection d'eau (17) montée dans un local du bâtiment (2) pour détecter une fuite et/ou un capteur de pression (10), comprenant un module de détection de fuite (18), qui, dans le cas d'une fuite détectée par la sonde de détection d'eau (17) et/ou le capteur de pression (10), ferme la vanne d'arrêt de branchement domestique (6) de manière non planifiée, de façon à ce que l'eau ne puisse plus continuer à s'écouler par la fuite,
**caractérisé**
**en ce que** le dispositif de commande (15) comprend un module d'horloge qui permet de fermer de manière planifiée la vanne d'arrêt de branchement domestique (6) pendant des périodes de temps déterminées, et permet, également dans le cas d'une vanne d'arrêt de branchement domestique (6) fermée de manière planifiée, un fonctionnement en mode rinçage pour lequel le dispositif de commande (15) est commuté temporellement par le module d'horloge, et pour lequel la vanne d'arrêt de branchement domestique (6) fermée de manière planifiée, et une vanne de rinçage (8) à fonctionnement motorisé, qui est raccordée à une extrémité de la conduite d'alimentation (7) et isole ou ferme la conduite d'alimentation (7) par rapport à l'écoulement d'évacuation d'eaux usées (12), sont ouvertes par le dispositif de commande (15).

2. Procédé pour commander un dispositif d'alimentation en eau potable et sanitaire selon la revendication 1, **caractérisé en ce que** le dispositif de commande (15) émet à un dispositif de commande de bâtiment (19) hiérarchiquement supérieur, notamment un système domotique de gestion de bâtiment, et réceptionne de là, un signal d'état.

3. Procédé pour commander un dispositif d'alimentation en eau potable et sanitaire selon l'une des revendications précédentes, **caractérisé par** un écoulement de sortie libre (11) prévu entre la vanne de rinçage (8) et l'écoulement d'évacuation d'eaux usées (12) et comportant un dispositif de surveillance de débordement (13) dont le signal est appliqué au dispositif de commande (15).

4. Procédé pour commander un dispositif d'alimentation en eau potable et sanitaire selon l'une des revendications précédentes, **caractérisé en ce que** le capteur de pression (10) est un capteur de pression surveillant la pression intérieure dans la conduite d'alimentation et dont le signal est traité dans le dispositif de commande (15) pour régler au moins l'une des vannes (6, 8) pouvant être commandées, et **en ce que** le dispositif de commande (15) est prévu de manière à ouvrir, en raison du signal du capteur de pression pour une vanne d'arrêt de branchement domestique (6) fermée, la vanne de rinçage et au moins une vanne de purge d'air associée à un système de conduites tubulaires englobant les conduites d'alimentation (7) et des conduites de rinçage (9), en vue de la vidange complète du système de conduites tubulaires.

5. Dispositif d'alimentation en eau potable et sanitaire (1) d'un bâtiment (2), comprenant un dispositif de commande (15) et un raccord de branchement domestique (3), qui peut être raccordé au réseau d'alimentation public, et différentes conduites d'alimentation (7) qui en partent et sont posées à l'intérieur du bâtiment (2), et auxquelles sont associées des conduites de rinçage (9) communiquant avec un écoulement d'évacuation d'eaux usées (12) qui peut être raccordé au réseau public d'assainissement,
et comprenant une vanne d'arrêt ou d'isolement de branchement domestique (6) à fonctionnement motorisé,
assurant l'isolement du raccord de branchement domestique par rapport aux conduites d'alimentation, le dispositif de commande (15), auquel est raccordé au moins une sonde de détection d'eau (17) montée dans un local du bâtiment (2) pour détecter une fuite et/ou un capteur de pression (10), comprenant un module de détection de fuite (18), qui, dans le cas d'une fuite détectée par la sonde de détection d'eau (17) et/ou le capteur de pression (10), ferme la vanne d'arrêt de branchement domestique (6) de manière non planifiée, de façon à ce que l'eau ne puisse plus continuer à s'écouler par la fuite,
**caractérisé**
**en ce que** le dispositif de commande (15) comprend un module d'horloge (16) qui permet de fermer de manière planifiée la vanne d'arrêt de branchement domestique (6) pendant des périodes de temps déterminées, et en ce que le dispositif de commande (15) englobe un processus de fonctionnement en mode rinçage, qui y est stocké sur le plan de la commande, et dans le cadre duquel le dispositif de commande, pour une vanne d'arrêt de branchement domestique (6) tout d'abord fermée de manière planifiée, ouvre la vanne d'arrêt de branchement domestique (6) et une vanne de rinçage (8), qui est raccordée à une extrémité de la conduite d'alimentation (7) et isole ou ferme la conduite d'alimentation (7) par rapport à l'écoulement d'évacuation d'eaux usées (12), pour rincer la conduite d'alimentation (7).

6. Dispositif d'alimentation en eau potable et sanitaire (1) selon la revendication 5, **caractérisé en ce que** le dispositif de commande (15) est configuré de manière à commuter le fonctionnement en mode rinçage, en fonction d'un signal d'un capteur de température (14).

7. Dispositif d'alimentation en eau potable et sanitaire (1) selon la revendication 5 ou la revendication 6, **caractérisé en ce que** le dispositif de commande (15) est configuré de manière à commuter le fonctionnement en mode rinçage, en fonction d'un signal d'un capteur de débit (22) surveillant le débit volumique dans la conduite d'alimentation (7) ou dans une conduite d'écoulement d'eaux usées.
